# EUROPEAN PATENT SPECIFICATION

(11) **EP 2 576 345 B1**
(45) Date of publication and mention of the grant of the patent: **04.01.2017**
(21) Application number: 11722069.9
(22) Date of filing: 27.05.2011
(51) Int. Cl.: B64D 13/00, B64D 13/06

(54) **AIR CONDITIONING SYSTEM WITH HYBRID OPERATION FOR AN AIRCRAFT**
HYBRID-BETRIEBENE KLIMAANLAGE FÜR EIN FLUGZEUG
SYSTÈME DE CLIMATISATION À FONCTIONNEMENT HYBRIDE POUR UN AÉRONEF

(30) Priority: 28.05.2010 US 349366 P; 28.05.2010 DE 102010021890
(43) Date of publication of application: 10.04.2013
(73) Proprietor: Airbus Operations GmbH, 21129 Hamburg (DE)
(72) Inventor: DITTMAR, Jan, 21614 Buxtehude (DE); BARKOWSKY, Jan, 19057 Schwerin (DE); MEVENKAMP, Christoph, 20146 Hamburg (DE)
(74) Representative: Kopf Westenberger Wachenhausen Patentanwälte PartG mbB
(86) International application number: PCT/EP2011/058759
(87) International publication number: WO 2011/147977

(56) References cited:
- EP-A2- 1 555 205
- WO-A2-2006/058774
- US-A1- 2007 266 695
- US-A1- 2009 326 737

## Description

### TECHNICAL FIELD

The invention relates to a system for air conditioning an aircraft.

### BACKGROUND TO THE INVENTION

For supplying energy and fresh air to air conditioning systems, de-icing systems or other equipment of aircraft, it is usual to use compressed air that in the form of bleed air is tapped from a compressor stage of an engine or is generated by means of a compressor that is driven by an auxiliary gas turbine ("APU"). This compressed air is fed to air conditioning units (so-called "packs") and air outlets of a de-icing system or other equipment. Normally, during operation of the aircraft this is the sole energy source, which by the air conditioning system is not only used for ventilation but also for cooling the supplied air, and also for pressurising the aircraft cabin.

The design of a suitable bleed air connection on an engine is determined by the maximum pressure requirement of the connected systems, which pressure requirement needs to be met in all imaginable operating states. However, this means that in a number of operating states of the aircraft a clearly excessive pressure and a clearly excessive volume flow must be provided at the bleed air connection, so that throttling needs to be carried out.

A bleed air connection that can provide an adequate pressure level must thus be arranged at a higher compressor stage of an engine, which in turn is associated with a higher temperature level. In the bleed-air-conveying elements such as valves, seals and pipes, which elements are arranged downstream of a bleed air connection, as a result of the pressure level and the temperature level the material used is subjected to very considerable loads and therefore needs to be adequately designed in order to ensure safe operation.

US 2007/0266695 A1 discloses a power supply and cooling system with an integrated power and cooling unit, which comprises a bleed air compressor, a cooling turbine arranged downstream of the bleed air compressor, a power turbine and a first starter generator, which is arranged on a common shaft of the power turbine and the cooling turbine.

US 2009/0326737 A1 discloses a hybrid electric and bleed air based architecture, which is directed to a pressurization and conditioning of a cabin of an aircraft.

EP 1 555 205 A2 discloses an air-conditioning system based on an air cycle machine for an aircraft, including a compressor and a turbine that may be supported by an electric motor (M).

WO 2006/058774 A2 discloses a supply system for an aircraft, comprising an air-conditioning system, which may provide electrical power to an additional compressor on demand.

### SUMMARY OF THE INVENTION

It is the object of the invention to reduce or eliminate the disadvantages stated above. In particular, it can be considered to be an object of the invention to propose an air conditioning system of the type mentioned in the introduction for an aircraft, which air conditioning system allows optimal removal of bleed air from an engine of an aircraft, during which removal a predetermined maximum pressure level for operating the air conditioning system and other equipment by the bleed air is exceeded to the smallest extent possible so that bleed-air-conveying elements or the like are subjected to lesser loads.

A further object of the invention may, moreover, consist of proposing an air conditioning system in which, at the same time as the provision of a cooling effect for cabin air, effective cooling of electronics devices can be achieved.

A further object of the invention may, moreover, consist of minimising any increase in fuel consumption that would result from throttle losses and heat losses of excess engine power output.

The object is met by a system for air conditioning an aircraft cabin, comprising at least one cooling circuit, at least one compressed-air line and at least one compressor for compressing air, wherein the cooling circuit is connected to the compressor by way of a compressed-air line and wherein the compressor is drivable independently of bleed air. The invention is defined by the appended claims.

The term "cooling circuit" can also refer to a cooling circuit system; it relates to a device in which by means of a thermodynamic cycle a medium can be cooled. Therefore the two terms of "cooling circuit" and "cooling circuit system" are used below.

By using the additional compressor, which is operable independently of bleed air, it is possible to additionally compress air from any desired source in order to achieve a required pressure level that makes it possible to operate the air conditioning system with the at least one cooling circuit. For example, bleed air of a too low pressure level may be tapped from an engine of the aircraft; it is not necessary with the pressure of the tapped bleed air to achieve the minimum pressure necessary for operating the air conditioning system in all operating conditions. The consequence from a different design of a bleed air connection and its arrangement in the regions of lower pressure in one or several flight phases consists of an energy gap which can be closed by the additional compressor of the air conditioning system according to the invention.

Operation of the compressor independently of bleed air results in hybridisation of the energy supply of the air conditioning system according to the invention.

Operation of the air conditioning system according to the invention, which air conditioning system comprises several energy sources, can in different advantageous embodiments be achieved in various ways.

In an advantageous embodiment at least one cooling circuit may be designed so as to be based on an air circuit principle for operation with compressed air. Such a cooling circuit or a cooling circuit system can be found in the usual air conditioning units of aircraft. These air conditioning units are often combined in the form of a compact bundle of various devices and are referred to as a "pack". Conditioning the air to provide air conditioning in the aircraft may be implemented with a conventional air conditioning unit that is operated by means of compressed air so that the air conditioning system according to the invention requires only slight modifications when compared to usual air conditioning systems. In this embodiment the compressor may be arranged upstream of this air conditioning unit and may be supplied from various sources with air or compressed air.

In a likewise example of the invention at least one cooling circuit or at least one cooling circuit system can be designed so as to be independent of compressed air. The above may be used to provide additional support, for example to an air conditioning unit as mentioned above, so that the pressure level of the compressed air provided for an air conditioning unit is completely sufficient at least for pressurising the cabin of the aircraft, and with the support of the additional cooling circuit system makes it possible to cool the air. The cooling circuit system that is independent of compressed air makes it possible in a simple manner to additionally integrate auxiliary cooling circuits for cooling electronics devices and the like.

In an advantageous embodiment of the invention heat sinks in the form of heat exchangers may be used for pre-cooling or main cooling, which heat exchangers are cooled with the use of outside air. For example, a cooling air stream may be conveyed through an integrated ram air duct and in flight may be achieved by ram air pressure while with the aircraft situated on the ground it may, for example, be achieved by an electrically operated cooling-air fan assembly. Such heat exchangers may either be an integral part of an air conditioning unit, through which part bleed air flows, or they may be implemented as external outside-air heat exchangers arranged upstream of the air conditioning unit, or they may be coupled to the air conditioning system according to the invention by way of a liquid-based intermediary circuit.

According to an advantageous embodiment, the compressor is designed so that it is connectable to a closable outside-air inlet. The outside-air inlet may be controlled in such a manner that in flight the outside-air inlet is closed. During time spent on the ground the closable outside-air inlet is preferably to be opened so that, independently of the operation of engines of the aircraft, by means of the compressor, air can be provided at an adequate pressure level for operating the air conditioning unit.

According to an example, the compressor forms an integral part of an air conditioning unit, thus, for example, forming one of the components of a pack that can achieve additional provision of compressed air independently of bleed air. This provides an advantage in that an air conditioning unit with this equipment according to the invention can be designed so as to be very compact and so that it can be positioned at a proven location within the aircraft.

According to an advantageous embodiment of the invention, the compressed-air line is connectable to a bleed air connection. Consequently, the air conditioning system can be supplied with bleed air from engines so that, for example in the flight phases in which higher or full engine performance is required, the supply of bleed air by engines is adequate for operating the air conditioning system, while in other flight phases it would be possible to change over to an additional or alternative compressed air supply. Supplying the air conditioning system exclusively with bleed air without further compression would, for example, be imaginable in the takeoff phase of the aircraft. However, this should only be considered to be one operating option that can be considered as an addition and only in relation to a few operating conditions. Such a concept may, for example, comprise a valve-controlled bypass that can bypass the remaining components according to the invention, for example the additional compressor. This would, furthermore, make it possible to design the operating characteristics of the compressor in a simpler manner because a lesser spectrum of necessary pressure increase needs to be covered. Furthermore, during bypassing of the compressor in the short operating phases no further temperature increase takes place by way of the compressor, which temperature increase would otherwise have to be compensated for by the air conditioning system. A bypass may comprise a non-return valve that opens as a result of a reversing pressure differential when the compressor is switched off.

In a further advantageous embodiment this may be implemented in that an air inlet of the compressor is connectable to a bleed air connection of at least one engine of the aircraft. At cruising altitude with moderate engine power output the pressure level of the bleed air may be increased in this way so that the minimum pressure for operating the air conditioning system is reached. The increase in pressure is implemented by means of energy sources that are independent of bleed air, and consequently the efficiency of the engines is improved.

According to an advantageous embodiment of the invention, the compressor is electrically operable. The electrical energy source may be implemented by one or several generators on the engines, on an auxiliary engine, or by means of one or several low-temperature fuel cells and/or high-temperature fuel cells.

In a further advantageous embodiment of the invention the compressed-air line is connectable to an air compressor driven by an auxiliary gas turbine of the aircraft so that during operation of an auxiliary gas turbine when the aircraft is situated on the ground, or in flight, the supply of bleed air from the engines can be minimised or eliminated. In this context it should be mentioned that the air compressor is preferably arranged on a shaft of the auxiliary gas turbine and no direct bleed air removal takes place at the auxiliary gas turbine.

Any removal of bleed air on engines of the aircraft is not limited to a single bleed air connection, but rather it is also possible for several bleed air connections to be used and to be interconnected by way of one or several regulating valves and an air-line network in order to meet the particular operating conditions of the aircraft.

In other words the air conditioning system according to the invention provides several advantages when compared to known air conditioning systems. These advantages are summarised below.

Compared to a present-day system the bleed air is tapped from a lower pressure stage. In this arrangement in such an architecture a bleed air system requires at least one port to tap compressed air. Depending on the application case and the design strategy, further ports can be integrated on further pressure stages or compressor stages. Depending on the maximum bleed air temperature that results from the design of the bleed air ports a pre-cooler can be provided. Adhering to maximum operating pressures in the bleed air system can take place by a corresponding selection of the bleed air positions on the engine; in other words, the maximum bleed air pressures to be expected do not exceed predetermined limiting values. As an alternative, this can also take place by means of conventional regulating valves.

As a result of the pressures and temperatures in a bleed air system, which are lower when compared to that of present-day systems, it is possible either to design the devices and pipes with thinner materials or, as an alternative, to use materials that are lighter in weight, the use of which materials has not been possible in conventional systems because of the high temperatures. This can result in a reduction in the weight of a bleed air system.

In addition to the pneumatic energy of the bleed air system the air conditioning system according to the invention uses electrical energy in order to optimally meet the functional requirements in terms of energy. The electrical energy closes the gap between the power requirement of the air conditioning system according to the invention and the available pneumatic power from the bleed air system. In flight, the electrical power can alternatively be obtained by the system according to the invention from generators of the engines, generators of the auxiliary gas turbine, fuel cells, or combinations of the above sources.

In operation with the aircraft on the ground, and in other cases in which the engines cannot provide any bleed air, this can take place by means of an air compressor (also known as a "load compressor") of the auxiliary gas turbine. When compared to those of existing systems, the pressure requirements placed on the air compressor are lower, because for this operating state too, part of the required power for the air conditioning system according to the invention can be provided by the electrical power realised in the compressor.

Optionally, the air conditioning system according to the invention would also offer the possibility of providing the bleed air by means of a fully-electrically operated compressor which may either be an integral component of an air conditioning unit or may be arranged upstream of said air conditioning unit. Air may be obtained directly by way of a dedicated outside-air inlet which is closed in flight. In this variant it is possible to do away with a bleed air system between the auxiliary gas turbine and the air conditioning unit, as well as to design the auxiliary gas turbine for fully electrical operation.

In both variants the electrical power for operation while the aircraft is on the ground may alternatively be obtained by the system according to the invention from generators of the auxiliary power unit, fuel cells, external ground supply systems, or combinations of the above.

The air conditioning system according to the invention provides pressurisation, cooling capacity and temperature regulation for the cabin and the cockpit, as well as additional cooling functions such as cooling of electronics devices in the form of power electronics and avionics devices. Generating the refrigeration capacity can typically be implemented by means of relaxation cooling, cold-vapour processes or other thermodynamic cycles that meet the requirements relating to the temperatures of the cabin supply air.

The electrical power consumption may be regulated by a controller in order to, for a required overall power, achieve optimal power draw of bleed air and electrical power at the engine.

For exemplary purpose, an energy supply system and a method for air conditioning an aircraft are described herein.

### BRIEF DESCRIPTION OF THE DRAWINGS

Further characteristics, advantages and application options of the present invention are disclosed in the following description of the exemplary embodiments and of the figures. All the described and/or illustrated characteristics per se and in any combination form the subject of the invention, even irrespective of their composition in individual claims or their interrelationships. Furthermore, identical or similar components in the figures have the same reference characters.
Fig. 1 shows a diagrammatic view of an air conditioning system according to the state of the art.
Fig. 2 shows a diagrammatic view of a first exemplary embodiment of an air conditioning system according to the invention.
Fig. 3 shows a diagrammatic view of a second exemplary embodiment of an air conditioning system according to the invention.
Fig. 4 shows a diagrammatic view of a third exemplary embodiment of an air conditioning system according to the invention.
Figs 5a and 5b show a comparison of a bleed-air-pressure profile of an air conditioning system from the state of the art and of that of an air conditioning system according to the invention.
Fig. 6 shows a block diagram of a method for air conditioning an aircraft.

### DETAILED DESCRIPTION OF EXEMPLARY EMBODIMENTS

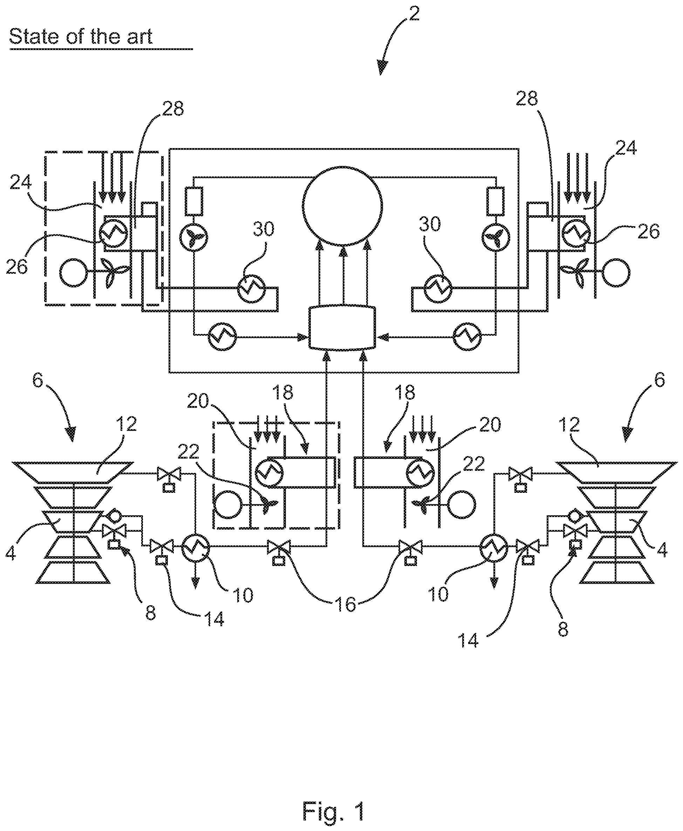

Fig. 1 shows an air conditioning system 2 according to the state of the art. Bleed air is tapped at high-pressure compressors 4 of engines 6, wherein in normal operation of the engine 6 this takes place from a front part of the high-pressure compressor 4, while in the case of throttling the engine power output, for example during descent, from a rear part of the high-pressure compressor 4 with a high-pressure valve 8 opening. In order to reduce the temperature of the tapped bleed air, it is cooled in a pre-cooler 10, typically (in the case of bypass engines) with the use of engine bypass air from a fan region 12 of the engine 6. A regulating valve 14 limits the pressure of the bleed air before it is conveyed onwards to bleed air consumers. A further regulating valve 16 regulates the quantity of the tapped bleed air, which subsequently is in each case conveyed to an air conditioning unit 18.

The air conditioning unit 18 normally operates on the basis of an air-supported cooling process which expands pressurised bleed air in a cooling turbine (not shown in detail) thus greatly cooling said bleed air. The waste heat of this cooling process is led to the surroundings by way of a ram air duct 20 and a cooling-air fan assembly 22. In addition to the functions of cabin air conditioning and of pressurising the cabin, additional cooling functions can be carried out, for example the provision of refrigeration capacity for cooling an avionics compartment. Fig. 1 shows such an additional distribution cycle. Outside air that can be obtained by way of an additional ram air duct 24 is used as a heat sink, in which ram air duct 24 thermal coupling to the distribution system is implemented by way of an air/liquid heat exchanger 26. In order to obtain temperatures below the outside temperatures in the distribution system, a cold-vapour cooling plant 28 is interposed. Consumers of the refrigeration capacity obtained in this arrangement are again thermally coupled to the system by way of a heat exchanger 30.

Further components, shown in Fig. 1 but not mentioned above, are listed and explained as required in the context of the exemplary embodiments.

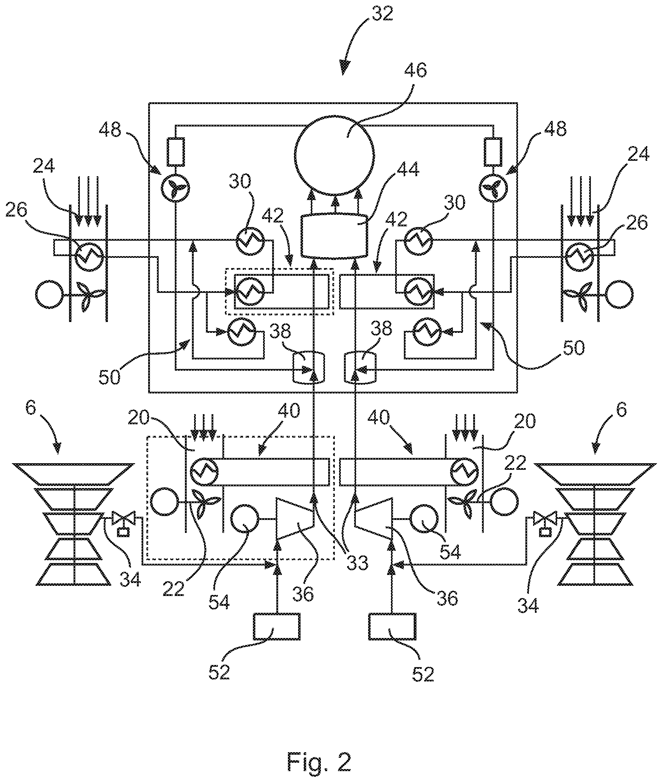

Fig. 2 shows a first exemplary embodiment of the air conditioning system 32 according to the invention with a compressed-air line 33. A special feature when compared to an air conditioning system 2 from the state of the art according to Fig. 1 consists of the fact that a bleed air connection 34 can be used which provides air at a significantly lower pressure level than usual. In the first exemplary embodiment this bleed air is fed to a compressor 36 that compresses the bleed air to a higher pressure level and subsequently mixes it in a first mixing unit 38 with recirculated cabin air. Before the compressed bleed air reaches the first mixing unit 38 it is conveyed by way of the compressed-air line 33 to a first cooling circuit 40 where it is cooled. In addition, the mixed air from the first mixing unit 38 is further cooled by a second cooling circuit 42, wherein this second cooling circuit 42 may, for example, be designed as a cold-vapour process. In a second mixing unit 44 this mixed air that has been further cooled in this manner is combined with the mixed air from a further strand of the air conditioning system 32 before it is made available to a cabin 46 or to some other space in the aircraft, which space is to be air conditioned.

At least in part, air is tapped from the cabin 46 by way of recirculation fans 48 and is conveyed to the first mixer unit 38.

In the context of the architecture presently shown it is possible, in a liquid-based intermediary cooling circuit 50, to implement additional secondary cooling functions. Depending on a required temperature level at the interface to further heat sources, the latter can be supplied parallel to the second cooling circuit 42, or they can be serially connected upstream or serially connected downstream. Parallel connection would make sense in the case of the temperature level between the mixed air and the further heat sources being identical; serial connection upstream in the case of a lower temperature level of the further heat sources; and serial connection downstream in the case of a higher temperature level of the further heat sources.

The first cooling circuit 40 and the second cooling circuit 42 can be implemented in the form of a single air conditioning unit so that these functions are not provided spatially apart from each other but rather if at all possible within a single compact unit. Of course, the first mixing unit 38 is to be arranged outside this air conditioning unit as soon as the required mixing volume exceeds reasonable design dimensions for an air conditioning unit.

In addition or as an alternative to supplying the compressors 36 from bleed-air sources 34, an air compressor 52 of an auxiliary gas turbine may be considered, which air compressor 52 can provide air at a relatively low pressure level that by means of further compression by the compressor 36 is adequate for operating the air conditioning system 32.

As an example, Fig. 2 shows an electrical drive 54 for operating the compressors 36. However, other drive types can also be suitable for this, for example hydraulic or pneumatic drives, wherein a pneumatic drive may, for example, be driven by compressed air from the compressor 52 of the auxiliary gas turbine.

In Figs. 1 and 2, to provide a better understanding, by means of a dashed box of a left-hand branch of an air conditioning system according to the invention and an air conditioning system from the state of the art, the components are indicated which may be combined to form an air conditioning unit, and which are consequently designed in a spatially closed-off and compact design unit. For the sake of simplicity these markings are limited to Figs 1 and 2; said markings can, however, of course be applied to all further illustrations.

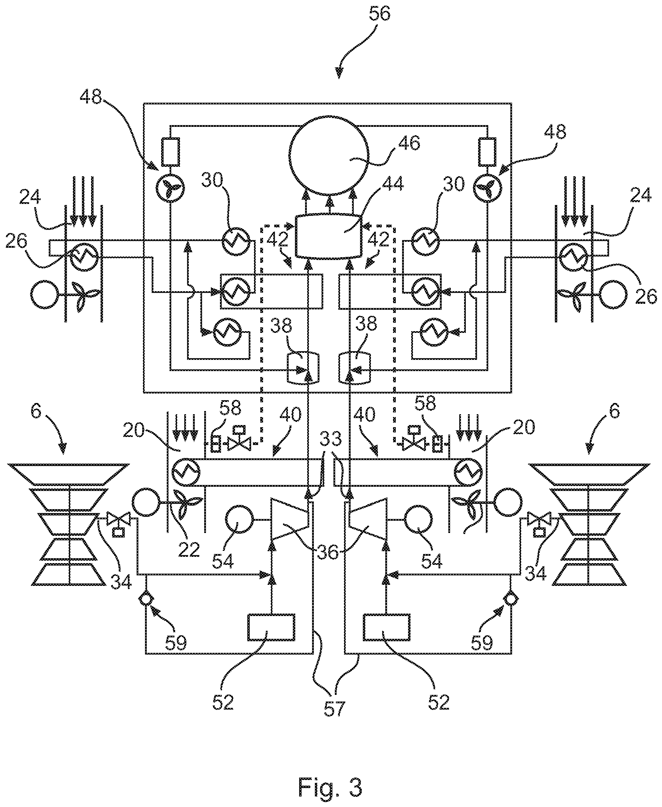

Fig. 3 shows a further exemplary embodiment of an air conditioning system 56 according to the invention in which a significant difference from the air conditioning system 32 according to Fig. 2 consists of the cabin 46, for example when the aircraft is situated on the ground, being able to be ventilated by means of an integrated cabin fan assembly 58, wherein the integrated cabin fan assembly 58 obtains the air, for example, from the ram air duct 20, optionally also from alternative outside-air inlet openings (not shown in detail in the illustration). Fig. 3 shows, as an example, that an integrated cabin fan assembly 58 conveys the fresh air directly to the second mixing unit 44 from where it reaches the cabin 46.

For certain flight phases with adequate bleed air pressure at the engines 6 for operating the air conditioning system 56 it would be possible, for example, to use a bypass 57 that may convey bleed air around the compressor 36 so that the air conditioning system is exclusively operated with bleed air that has not been subjected to further compression. The flight phases under consideration are characterised by a requirement for high engine power output, for example takeoff. For cruising flight, due to insufficient bleed air pressure, the use of the bypass would not be possible, nor, as a result of the above-mentioned advantages of the invention, would such use be sensible.

Controlling the bypass may take place by means of a simple non-return valve 59 which makes it possible for bleed air to flow into the bypass 57 and thus directly into the compressed-air line 33, provided the pressure from the compressor 36 does not exceed the bleed air pressure. Thus with the compressor switched off, the non-return valve 59 would immediately open.

It is understood that this bypass 57 may be present in all the exemplary embodiments, but it is shown in more detail as an example only in Fig. 3.

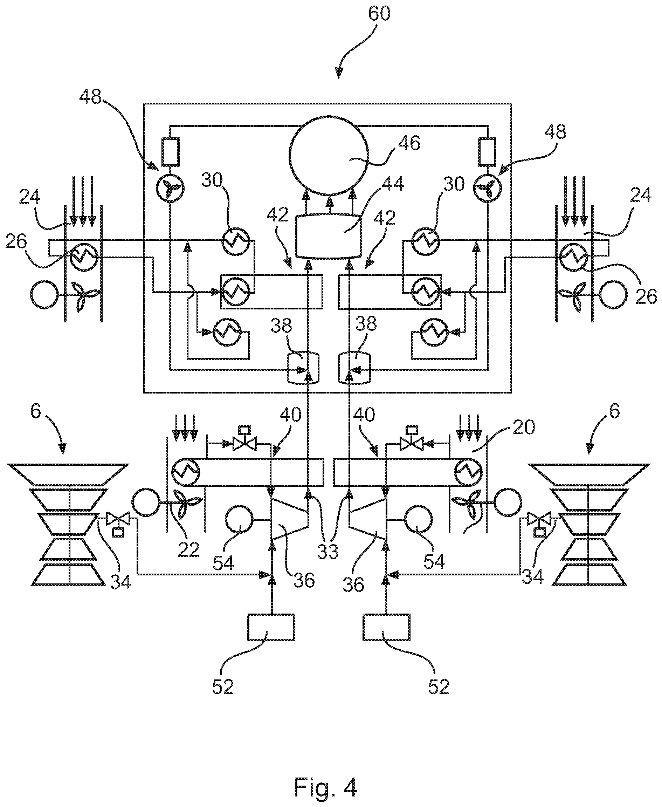

Fig. 4 shows a further exemplary embodiment of an air conditioning system 60 that essentially corresponds to the air conditioning system 32 of Fig. 2, in which, however, fresh air from an outside-air inlet opening, for example in the form of the ram air duct 20, is conveyed to the compressor 36 so that, during operation while the aircraft is on the ground, supply to the air conditioning system 60 is provided, which supply is completely independent of bleed air.

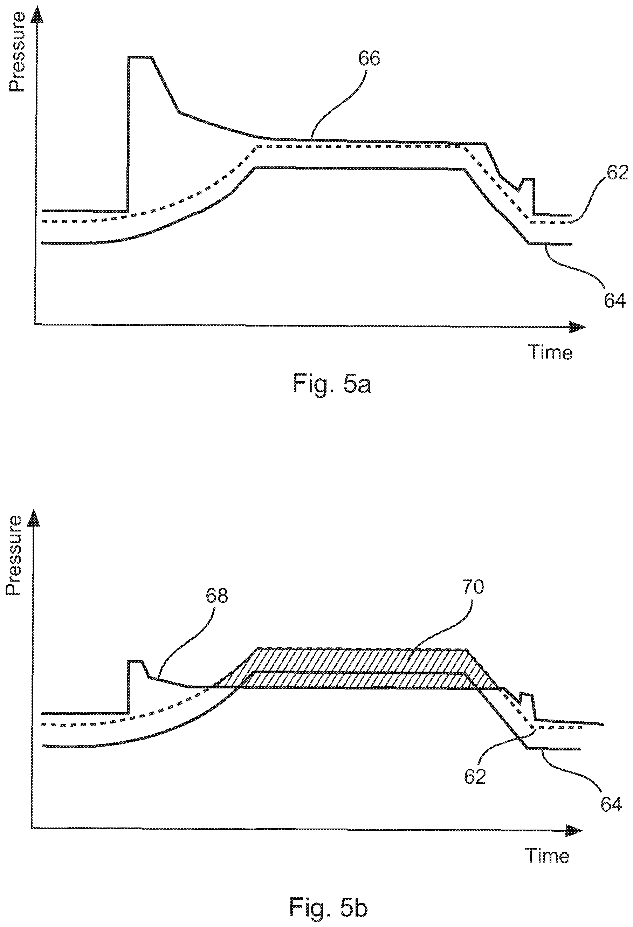

Below, a comparison of bleed-air pressure profiles relating to an air conditioning system according to the state of the art (Fig. 5a) and relating to an air conditioning system according to the invention (Fig. 5b) is briefly explained.

In Fig. 5a the maximum required bleed air pressure for operating an air conditioning system on a relatively warm day is shown by means of a dashed line 62. The curve 64 below it shows the required bleed-air pressure profile on a day of average temperatures. According to the state of the art, the bleed air pressure 66 always exceeds the required bleed air pressure 62 or 64, so that under all circumstances and in all flight phases the air conditioning system can be operated by the provided bleed air. In particular during takeoff and in climbing flight the bleed air pressure provided is significantly higher than any bleed air pressure ever required, wherein the excess pressure is reduced by means of throttle valves and the like. This equates to a loss of energy.

According to Fig. 5b, in an air conditioning system according to the invention, as a result of the additional compressor 36 a significantly lower level of bleed air pressure 68 is required, wherein if the bleed air pressure 62 or 64 required in each case is not achieved, the compressor 36 is used, for example in order to generate electrical energy for coping with the resulting pressure differential 70 (shown as a shaded area). This equally means that the pressure and volume flow of the tapped bleed air only need to be throttled during short flight segments in which relatively high thrust is required. However, when the aircraft is cruising, the pressure level of the bleed air is not quite adequate to be able to fully operate the air conditioning system according to the invention. Accordingly, throttling of pressure and volume flow is not necessary during the longest flight segments, for example during cruising, which equates to a significant improvement in the efficiency of the engines when compared to that of the state of the art.

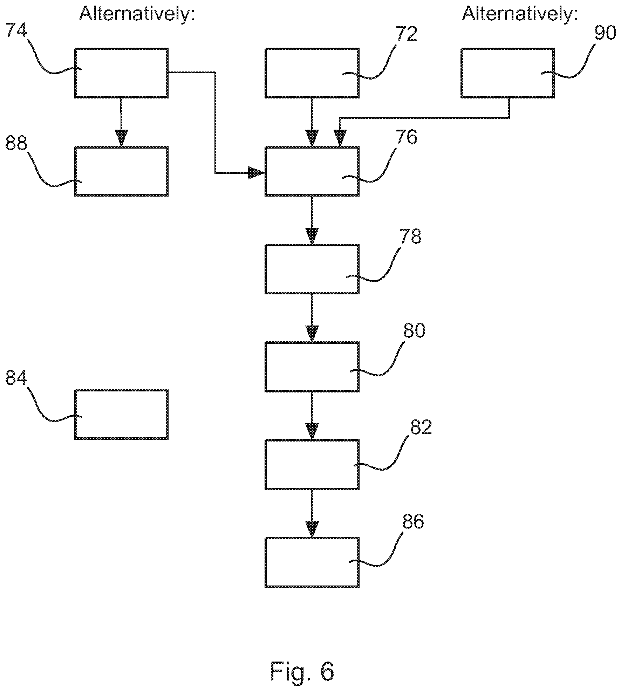

Fig. 6 diagrammatically shows a method for air conditioning an aircraft. The method may commence with the removal of bleed air 72; as an alternative it may also comprise conveying 74 fresh air from an outside-air inlet opening. Said fresh air may be compressed by a compressor 76 and may be used for ventilation.

If and when required, in other words in the predominant, longer, flight segments, the bleed air is additionally compressed 76 by means of a compressor, and is conveyed 78 to at least one cooling circuit. After this, pre-cooling 80 may take place by way of a first cooling circuit 40, followed by mixing 82 with cabin air. Before, during or after this step of mixing, additional cooling 84 may take place, for example by way of a cold-vapour process in a second cooling circuit 42. Finally, the air which has been conditioned in this manner is conveyed 86 to a cabin 46. Furthermore, the method according to the invention may also involve ventilating 88 the cabin by way of a cabin fan assembly, for example when the aircraft is situated on the ground. As an alternative, or in addition to bleed air and/or outside air from an outside-air inlet opening, it would also be possible to convey 90 compressed air from an air compressor to the compressor, wherein the air compressor may be driven by an auxiliary gas turbine.

In addition, it should be pointed out that "comprising" does not exclude other elements or steps, and "a" or "one" does not exclude a plural number. Furthermore, it should be pointed out that characteristics or steps which have been described can also be used in combination with other characteristics or steps described above. Reference characters in the claims are not to be interpreted as limitations.

### LIST OF REFERENCE CHARACTERS

- 2: Air conditioning system
- 4: High-pressure compressor
- 6: Engine
- 8: High-pressure valve
- 10: Heat exchanger
- 12: Fan region
- 14: Regulating valve
- 16: Regulating valve
- 18: Air conditioning unit (pack)
- 20: Ram air duct
- 22: Cooling-air fan assembly
- 24: Ram air duct
- 26: Heat exchanger
- 28: Cold-vapour cooling plant
- 30: Heat exchanger
- 32: Air conditioning system
- 33: Compressed-air line
- 34: Bleed air connection
- 36: Compressor
- 38: First mixing unit
- 40: First cooling circuit
- 42: Second cooling circuit
- 44: Second mixing unit
- 46: Cabin
- 48: Recirculation fan
- 50: Intermediary cooling circuit
- 52: Air compressor
- 54: Electrical drive
- 56: Air conditioning system
- 57: Bypass
- 58: Integrated cabin fan assembly
- 59: Non-return valve
- 60: Air conditioning system
- 62: Bleed air required on hot days
- 64: Bleed air required on average days
- 66: Bleed air pressure
- 68: Required bleed air pressure (according to the invention)
- 70: Pressure differential
- 72: Tap bleed air
- 74: Convey fresh air
- 76: Compress
- 78: Convey to cooling circuit
- 80: Pre-cool
- 82: Mix with cabin air
- 84: Cool
- 86: Convey to cabin
- 88: Ventilate the cabin
- 90: Convey compressed air to the compressor

## Claims

1. A system for air conditioning an aircraft cabin, comprising
- a first cooling circuit (40)
- a second cooling circuit (42) which is separated from the first cooling circuit (40),
- at least one compressed-air line (33) and
- at least one compressor (36) for compressing air,
wherein an inlet of the compressor (36) is connectable to a bleed air connection (34) of at least one engine (6) of the aircraft such that bleed air can be fed to the compressor (36),
**characterized in that**
the first cooling circuit (40) is connected to the compressor (36) by way of the compressed-air line (33) at an inlet and with a first mixing unit (38) at an outlet, such that the compressed bleed air is conveyed by way of the compressed-air line (33) to the first cooling circuit (40) in order to be cooled before the compressed bleed air reaches the first mixing unit (38),
wherein the first mixing unit (38) is adapted for receiving cooled air from the first cooling circuit (40) and air from the cabin (46) and for conveying it to the second cooling circuit (42),
wherein the first mixing unit (38) is configured to mix the compressed bleed air with recirculated cabin air and
wherein the compressor (36) is drivable by an external drive independently of inlet air.

2. The air conditioning system (32, 56, 60) of claim 1,
wherein at least one cooling circuit (40, 42) is designed so as to be based on an air circuit principle for operation with compressed air.

3. The air conditioning system (32, 56, 60) of claim 1 or 2,
further comprising a heat exchanger, wherein the first cooling circuit (40) and the second cooling circuit (42) each are coupled with the heat exchanger, which is configured to be positioned in a ram air channel (20, 24).

4. The air conditioning system (32, 56, 60) of any one of the preceding claims,
wherein the compressor (36) is connectable to a closable outside-air inlet.

5. The air conditioning system (32, 56, 60) of any one of the preceding claims,
wherein the compressed-air line is connectable to a bleed air connection.

6. The air conditioning system (32, 56, 60) of claim 5,
wherein a non-return valve that is configured to open towards the compressed-air line is arranged between the bleed air connection and the compressed-air line.

7. The air conditioning system (32, 56, 60) of any one of the preceding claims,
wherein the second cooling circuit (42) is configured to be coupled with a fluid based intermediary cooling circuit (50) for realising secondary cooling functions.

8. The air conditioning system (32, 56, 60) of any one of the preceding claims,
wherein the compressor (36) is electrically operable.

9. The air conditioning system (32, 56, 60) of any one of the preceding claims,
wherein an air compressor (52) driven by an auxiliary gas turbine of the aircraft is connectable to the compressed-air line (33).

## Patentansprüche

1. System zum Klimatisieren einer Kabine eines Flugzeugs, aufweisend
- einen ersten Kühlkreislauf (40),
- einen zweiten Kühlkreislauf (42), der von dem ersten Kühlkreislauf (40) getrennt ist,
- mindestens eine Druckluftleitung (33) und
- mindestens einen Verdichter (36) zum Verdichten von Luft,
wobei ein Eingang des Verdichters (36) mit einem Zapfluftanschluss (34) mindestens eines Triebwerks (6) des Flugzeugs verbindbar ist, so dass Zapfluft in den Verdichter (36) leitbar ist,
**dadurch gekennzeichnet, dass** der erste Kühlkreislauf (40) eingangsseitig über die Druckluftleitung (33) mit dem Verdichter (36) und ausgangsseitig mit einer ersten Mischereinheit (38) verbunden ist, so dass die komprimierte Zapfluft über die Druckluftleitung (33) an den ersten Kühlkreislauf (40) geleitet wird, um gekühlt zu werden, bevor die komprimierte Zapfluft den die erste Mischereinheit (38) erreicht,
wobei die erste Mischereinheit (38) dazu eingerichtet ist, gekühlte Luft aus dem ersten Kühlkreislauf (40) und Luft aus der Kabine (46) aufzunehmen und an den zweiten Kühlkreislauf (42) zu leiten,
wobei die erste Mischereinheit (38) dazu ausgebildet ist, die verdichtete Zapfluft mit rezirkulierter Kabinenluft zu mischen und
wobei der Verdichter (36) durch einen externen Antrieb und unabhängig von Eingangsluft antreibbar ist.

2. Klimatisierungssystem (32, 56, 60) nach Anspruch 1,
wobei mindestens ein Kühlkreislauf (40, 42) auf einem Luftkreislaufprinzip zum Betrieb mit verdichteter Luft basierend ausgeführt ist.

3. Klimatisierungssystem (32, 56, 60) nach Anspruch 1 oder 2,
ferner aufweisend einen Wärmetauscher, wobei der erste Kühlkreislauf (40) und der zweite Kühlkreislauf (42) jeweils mit dem Wärmetauscher gekoppelt sind, der dazu eingerichtet ist, in einem Stauluftkanal (20, 24) angeordnet zu werden.

4. Klimatisierungssystem (32, 56, 60) nach einem der vorhergehenden Ansprüche,
wobei der Verdichter (36) mit einem verschließbaren Außenlufteinlass verbindbar ist.

5. Klimatisierungssystem (32, 56, 60) nach einem der vorhergehenden Ansprüche,
wobei die Druckluftleitung mit einem Zapfluftanschluss verbindbar ist.

6. Klimatisierungssystem (32, 56, 60) nach Anspruch 5,
wobei Rückschlagventil, das dazu eingerichtet ist, zu der Druckluftleitung hin zu öffnen, zwischen dem Zapfluftanschluss und der Druckluftleitung angeordnet ist.

7. Klimatisierungssystem (32, 56, 60) nach einem der vorhergehenden Ansprüche,
wobei der zweite Kühlkreislauf (42) dazu eingerichtet ist, mit einem flüssigkeitsbasierten Zwischenkühlkreislauf (50) zum Realisieren sekundärer Kühlfunktionen verbunden zu werden.

8. Klimatisierungssystem (32, 56, 60) nach einem der vorhergehenden Ansprüche,
wobei der Verdichter (36) elektrisch betreibbar ist.

9. Klimatisierungssystem (32, 56, 60) nach einem der vorhergehenden Ansprüche,
wobei ein von einer Hilfsgasturbine des Flugzeugs angetriebener Druckluftkompressor (52) mit der Druckluftleitung (33) verbindbar ist.

## Revendications

1. Système de climatisation d'une cabine d'aéronef, comprenant :
- un premier circuit de refroidissement (40),
- un second circuit de refroidissement (42) qui est séparé du premier circuit de refroidissement (40),
- au moins une conduite d'air comprimé (33) et
- au moins un compresseur (36) pour comprimer l'air, dans lequel une entrée du compresseur (36) peut être reliée à un raccord d'air de prélèvement (34) d'au moins un moteur (6) de l'aéronef de telle sorte que l'air de prélèvement peut être acheminé vers le compresseur (36), **caractérisé en ce que** le premier circuit de refroidissement (40) est relié au compresseur (36) par l'intermédiaire de la conduite d'air comprimé (33) au niveau d'une entrée et avec une première unité de mélange (38) au niveau d'une sortie, de sorte que l'air de prélèvement comprimé est acheminé par l'intermédiaire de la conduite d'air comprimé (33) vers le premier circuit de refroidissement (40) afin d'être refroidi avant que l'air de prélèvement comprimé n'atteigne la première unité de mélange (38),
dans lequel la première unité de mélange (38) est conçue pour recevoir de l'air refroidi du premier circuit de refroidissement (40) et de l'air de la cabine (46) pour l'acheminer vers le second circuit de refroidissement (42),
dans lequel la première unité de mélange (38) est configurée pour mélanger l'air de prélèvement comprimé avec l'air de cabine remis en circulation, et
dans lequel le compresseur (36) peut être entraîné par un entraînement externe indépendamment de l'air d'admission.

2. Système de climatisation (32, 56, 60) selon la revendication 1,
dans lequel au moins un circuit de refroidissement (40, 42) est conçu de façon à être basé sur un principe du circuit d'air pour fonctionner avec de l'air comprimé.

3. Système de climatisation (32, 56, 60) selon la revendication 1 ou 2,
comprenant en outre un échangeur de chaleur, dans lequel le premier circuit de refroidissement (40) et le second circuit de refroidissement (42) sont chacun couplés à l'échangeur de chaleur, qui est configuré pour être positionné dans un canal d'air dynamique (20, 24).

4. Système de climatisation (32, 56, 60) selon l'une des revendications précédentes,
dans lequel le compresseur (36) peut être relié à une entrée d'air extérieur pouvant être fermée.

5. Système de climatisation (32, 56, 60) selon l'une quelconque des revendications précédentes,
dans lequel la conduite d'air comprimé peut être reliée à un raccord d'air de prélèvement.

6. Système de climatisation (32, 56, 60) selon la revendication 5,
dans lequel un clapet anti-retour qui est configuré pour s'ouvrir vers la conduite d'air comprimé est agencé entre le raccord d'air de prélèvement et la conduite d'air comprimé.

7. Système de climatisation (32, 56, 60) selon l'une quelconque des revendications précédentes,
dans lequel le second circuit de refroidissement (42) est configuré pour être couplé à un circuit de refroidissement intermédiaire à base de fluide (50) pour réaliser des fonctions de refroidissement secondaires.

8. Système de climatisation (32, 56, 60) selon l'une quelconque des revendications précédentes,
dans lequel le compresseur (36) peut être actionné de façon électrique.

9. Système de climatisation (32, 56, 60) selon l'une quelconque des revendications précédentes,
dans lequel un compresseur d'air (52) entraîné par une turbine à gaz auxiliaire de l'aéronef peut être relié à la conduite d'air comprimé (33).
